# EUROPÄISCHE PATENTSCHRIFT

(11) **EP 0 674 375 B1**
(45) Veröffentlichungstag und Bekanntmachung des Hinweises auf die Patenterteilung: **22.04.1998**
(21) Anmeldenummer: 95104056.7
(22) Anmeldetag: 20.03.1995
(51) Int. Cl.: H02G 5/06

(54) **Lösbare Kupplungsvorrichtung zwischen zwei miteinander fluchtenden elektrischen Leitern**
Releasable coupling device between two aligned conductors
Dispositif amovible d'accouplement de deux conducteurs s'alignant entre eux

(30) Priorität: 26.03.1994 DE 4410650D
(43) Veröffentlichungstag der Anmeldung: 27.09.1995
(73) Patentinhaber: ABB PATENT GmbH, 68309 Mannheim (DE)
(72) Erfinder: Müller, Ottmar, Prof. Dr., D-12459 Berlin (DE)
(74) Vertreter: Rupprecht, Klaus, Dipl.-Ing.

(56) Entgegenhaltungen:
- DE-A- 2 429 158
- US-A- 3 646 245
- US-A- 4 556 755

## Beschreibung

Die Erfindung betrifft eine lösbare Kupplungsvorrichtung nach dem Oberbegriff des Anspruches 1 (Vgl US-A-4 556 755).

Zur Montageverbindung von feststoffisolierten Ausleitungen in einer gasisolierten Hochspannungsschaltanlage und darüberhinaus zur Bildung einer lösbaren Kupplungsvorrichtung für zwei miteinander fluchtende, elektrische Leiter sind Kontaktelemente vorgesehen, die an ihren freien Enden kegelförmig oder kegelstumpfförmig ausgebildet sind und in Vertiefungen an den elektrischen Leitern eingreifen, die eine daran angepaßte, ebenfalls kegel- oder kegelstumpfförmige Form aufweisen. Die Kontaktierung zwischen den Leitern und dem Kontaktelement erfolgt über die kegelstumpfförmigen oder kegelförmigen Flächenkontakte. Bei dieser Konstruktion erlaubt die Verbindung keine Toleranzen, weder in axialer noch in radialer Richtung, und darüberhinaus ist ein Querausbau eines Leiterabschnittes ohne Verrückung oder Verlagerung des anderen Leiterabschnittes unmöglich.

Aufgabe der Erfindung ist es, eine Kupplungsvorrichtung der eingangs genannten Art so zu verbessern, daß auf radiale und axiale Toleranzen nicht mehr geachtet werden muß und daß ein einfacher Querausbau eines Leiterabschnittes ohne Beeinflussung eines anderen oder Behinderung durch einen anderen Leiterabschnitt möglich ist.

Diese Aufgabe wird erfindungsgemäß gelöst durch die kennzeichnenden Merkmale des Anspruches 1.

Erfindungsgemäß wird der Kontaktkörper in den Vertiefungen verschiebbar geführt und ist mit den Innenflächen der Vertiefungen elektrisch leitend in Kontakt. Mittels der Feder wird der Kontaktkörper in die Vertiefung des ersten Leiters gedrückt; er ragt aus dieser Vertiefung heraus und in die Vertiefung des zweiten Leiters, wobei er den Spalt zwischen den beiden Leitern überbrückt. Zur Demontage kann der Kontaktkörper entgegen dem Druck der Feder in die Vertiefung des zweiten Leiters gedrückt werden, so daß er von dem ersten Leiter freikommt. Danach kann dieser erste Leiter demontiert werden, quer zu seiner Längsachse. Aufgrund der erfindungsgemäßen Ausführung können radiale Toleranzen und insbesondere axiale Toleranzen ohne weiteres ausgeglichen werden. Außerdem ist die Breite des Spaltes zwischen den Leitern entsprechend der Länge des Kontaktkörpers variabel. Zur Kontaktierung des Kontaktkörpers mit den Leitern sind federnd nach außen gedrückte Kontaktelemente vorgesehen sind, die gegen die Innenflächen der elektrischen Leiter gedrückt sind.

Bei einer weiteren Ausgestaltung ist der Kontaktkörper aus zwei ineinandergreifenden Kontaktkörperteilen zusammengesetzt; dazwischen befindet sich eine Feder, die die Kontaktkörperteile auseinanderzudrücken sucht.

Eine weitere Ausgestaltung der Erfindung kann dahin gehen, daß gemäß Anspruch 5 der Kontaktkörper an seinem Außenumfang Kontaktfinger aufweist, die gegen die Innenflächen der entsprechenden Vertiefungen der Leiter gedrückt sind. Zur Vereinfachung kann der Kontaktkörper aus zwei Kontaktkörperteilen zusammengesetzt sein, von denen wenigstens ein Teil sich in die zum anderen Teil entgegengesetzte Richtung im Durchmesser konisch oder kegelstumpfförmig erweitert; die Kontaktfinger werden dann, wenn die beiden Kontaktkörperteile gegeneinandergedrückt werden, aufgrund der Kegelstumpfform wenigstens an ihrem einen Ende radial nach außen gedrückt und so gegen die Innenfläche der benachbarten Vertiefung angepreßt werden. Es besteht natürlich auch die Möglichkeit, beide Kontaktkörperteile mit Erweiterungen zu versehen, deren Durchmesser sich in entgegengesetzte Richtung erweitert; dann werden beide Enden der Kontaktfinger nach außen gegen die Innenflächen der beiden Vertiefungen gedrückt. Wenn die Erweiterung nur an einem Kontaktkörperteil vorgesehen ist, können die Kontaktfinger am anderen Kontaktkörperteil angeformt oder auf andere Weise befestigt sein; die Kontaktierung erfolgt an diesem Kontaktteil beispielsweise über Schraubenkontakte, Multilamellenkontaktelemente oder dgl.

Eine bevorzugte Ausführungsform der Erfindung kann dahingehen, daß die Konusform an den Kontaktkörperteilen, der eine gleiche Konusform an der Innenseite der Kontaktfinger entspricht, jeweils einen Öffnungswinkel von ca. 5° bis 15° aufweist; ein bevorzugter Wert liegt bei etwa 10° Öffnungswinkel. Mit diesen konischen oder kegelstumpfförmigen Erweiterungen wird eine Keilwirkung erzielt, mit der eine axiale Kontaktkraft in eine radiale Kontaktkraft umgelenkt wird, wodurch je nach Öffnungswinkel der Konus formen oder Konusform eine Kontaktkraftverstärkung erzielt werden kann.

Weitere vorteilhafte Ausgestaltungen und Verbesserungen der Erfindung sind den weiteren Unteransprüchen zu entnehmen.

Anhand der Zeichnung, in der einige Ausführungsbeispiele der Erfindung dargestellt sind, sollen die Erfindung sowie weitere vorteilhafte Ausgestaltungen und Verbesserungen und weitere Vorteile näher erläutert und beschrieben werden.

Es zeigen:
- Fig. 1: eine erste Ausgestaltung der Erfindung,
- Fig. 2: eine weitere Ausführungsform der Erfindung die auf dem in der Fig. 1 dargestellten Prinzip beruht,
- Fig. 3: eine dritte Ausführungsform der Erfindung,
- Fig. 4: eine vierte Ausführungsform der Erfindung,
- Fig. 5: eine fünfte Ausführungsform der Erfindung, mit Kontaktfingern, und
- Fig. 6: eine sechste Ausführungsform der Erfindung, ebenfalls mit Kontaktfingern.

Im Zuge einer Hochspannungsleitung sind an nicht näher dargestellten Hochspannungsleitern rohrförmige Leiterteilstücke 10 und 11 angeschlossen, an deren den entsprechenden Leitern zugewandten Enden in die Leiterteilstücke Befestigungseinsätze 12 und 13 bündig eingeschweißt sind. An den Außenflächen der Befestigungseinsätze 12 und 13 sind jeweils zwei Gewindelöcher 14 und 15 vorgesehen, an denen die daran anschließenden Leiter befestigt werden können. Die Leiterteilstücke 10, 11 enden in einem Abstand D voneinander. Selbstverständlich könnten die Hochspannungsleiter direkt bis auf den Abstand D geführt sein. Dann wären die folgenden Ausführungen sinngemäß anzuwenden und zu verstehen.

Im Inneren des Leiterteilstückes 10 ist an dem Befestigungseinsatz ein Schraubenbolzen 16 befestigt, der in der Mittelachse des Leiterteilstückes 10 verläuft und an dessem freien Ende eine als Anschlag dienende Kontaktplatte 20 befestigt ist, wobei die Ebene der Kontaktplatte 20 senkrecht zur Mittelachse des Leiterteilstückes 10 verläuft. Innerhalb der Leiterteilstücke 10, 11 befindet sich ein Kontaktkörper 17, der an seinem einen Ende Nuten 18 mit darin angebrachten Kontaktelementen 19 und an seinem anderen Ende Nuten 21 mit darin eingebrachten Kontaktelementen 22 aufweist. Der Kontaktkörper 17 besitzt drei parallel zueinander verlaufende Querbohrungen 23, die durch die Mittelachse des Kontaktkörpers 17 verlaufen, sowie senkrecht dazu verlaufende weitere Querbohrungen 24, die jeweils zwischen den Querbohrungen 23 liegen.

Auf der der Kontaktplatte 20 entgegengesetzt liegenden Stirnseite besitzt der Kontaktkörper eine Art Sackloch 25, in die eine Schraubendruckfeder 26 hineingreift und darin geführt ist; das andere Ende der Schraubendruckfeder 26 legt sich in einer Ausnehmung 27 am Halteeinsatz 13 an.

Die Schraubendruckfeder drückt den Kontaktkörper 17 gegen die Kontaktplatte 20, so daß hierdurch eine elektrisch leitende Verbindung zwischen den Leitern 10 und 11 erzeugt wird. Darüberhinaus ist auch eine elektrisch leitende Verbindung zwischen den Kontaktelementen 19, 22 und den Innenflächen der hohlen Leiterelemente 10 und 11 erzeugt. Die Kontaktelemente sind hierbei bevorzugt durch Schraubenfederkontakte, z. B. aus Beryllium-Bronze, gebildet.

Jedes Leiterteil 10, 11 ist an seinem freien Ende von einem topfartigen Isolator 28 und 29 umgeben, die in Richtung der Leiterteilstücke 10 und 11 verlaufende vorspringende zylindrische Kragen 30 und 31 aufweisen, deren Außenflächen mit einer Metallumhüllung bzw. einem Metallbelag 32 und 33 umgeben sind. Am Leiterteilstück 10 bzw. 11 schließt sich am Isolator eine rohrförmige Ummantelung 34 und 35 an, die das Leiterteilstück 10 bzw. 11 dicht umgibt.

Die beiden Isolatoren 28 und 29 sind mittels Verbindungselementen 40, die mehrere am Umfang verteilte Schraubenbolzen 41 aufweisen, miteinander verbunden. Mittels Lamellenkontaktstücken 42 und 43, die mit den Metallbelägen 32 und 33 elektrisch leitend verbunden sind, wird eine durchgehende Erdung erzielt. Zwischen den beiden Isolatoren befindet sich ein Zwischenisolatorstück 44 aus elastischem Material, welches zugleich zur Abfederung von Toleranz- und Wärmeausdehnungen dient.

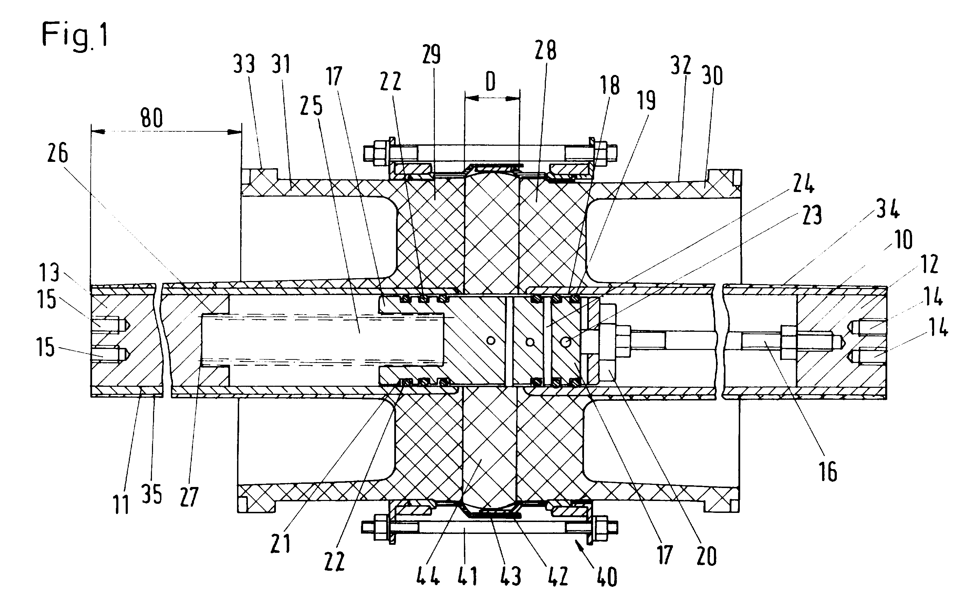

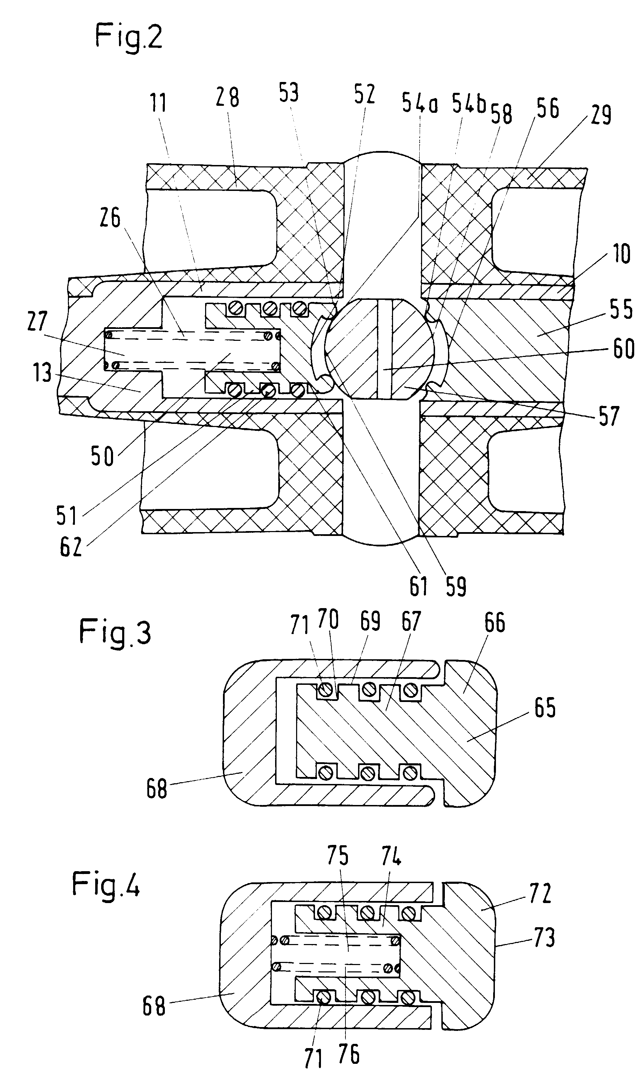

Eine weitere Ausgestaltung der Erfindung ist der Fig. 2 zu entnehmen. Die beiden Leiterteilstücke 10 und 11 sind an ihren freien Enden von dem Isolator 28 und 29 umgeben, welche die gleiche Ausführung und die gleiche Gestalt besitzen wie die beiden Isolatoren 28 und 29 der Fig. 1. Innerhalb des Leiterteilstückes 11 befindet sich der Befestigungseinsatz 13 mit seiner Vertiefung 27, in die die Druckfeder 26 eingreift und darin geführt ist. Das andere Ende der Feder 26 greift in eine Ausnehmung 50 ein, die der Ausnehmung 25 entspricht und die in einem Druckkontaktkörper 51 eingebracht ist. Auf der der Vertiefung oder Ausnehmung 51 entgegengesetzten Seite des Druckkontaktkörpers 51 befindet sich eine tellerförmige Ausnehmung 52, die symmetrisch zur Mittelachse ausgebildet ist und in Abstand von ihrem Rand 53 einen umlaufenden Wulst 54 aufweist. Innerhalb des Leiters 10 oder Leiterteilstückes 10 befindet sich ein Befestigungseinsatz 55, der eine der Vertiefung 52 entsprechende Vertiefung 56 und einen entsprechenden Wulst 54b aufweist. Zwischen den Vertiefungen 52 und 56 befindet sich ein Kontaktkörper 57, der an seinen Stirnenden ballige Abrundungen 58 und 59 aufweist und dessen gesamte axiale Länge größer ist als der Abstand der sich gegenüberliegenden Leiterteilstücke 10, 11. Der Kontaktkörper 57 besitzt eine der Querbohrungen 23 bzw. 24 ähnliche Querbohrung 60. An dem Außenumfang des Druckkontaktkörpers 51 befinden sich Rillen 61, in denen elektrische Kontaktelemente 62 untergebracht sind, die den Kontaktelementen 19 bzw. 22 entsprechen. Hier ist der Kontaktkörper 57 über das Druckstück 51 federnd gegen den anderen Leiter gedrückt.

Der Kontaktkörper 57 kann entsprechend Fig. 3 auch zweiteilig ausgebildet sein. Das erste Teil 65 besitzt eine Pilzform mit Pilzhut 66 und Stiel 67, wogegen das zweite Teil 68 eine Topfform aufweist mit an der Innenfläche der Topfwand 69 eingeformten Rillen 70, in die Kontaktelemente 71 eingreifen, die dann mit der Außenfläche des Stieles 67 in Kontakt gelangen.

Bei der Ausführung nach der Fig. 4 ist in den Topf 68 ein Pilzteil 72 mit Pilzkopf 73 und Stiel 74 eingebracht; im Stiel 74 ist eine Vertiefung 75 vorgesehen, in der eine Druckfeder 76 eingebracht ist. Die Druckfeder 76 drückt die beiden Teile 72 und 68 auseinander. Ggf. können in gleicher Weise wie bei der Ausführung nach Fig. 3 auch Kontaktelemente 71 vorgesehen sein.

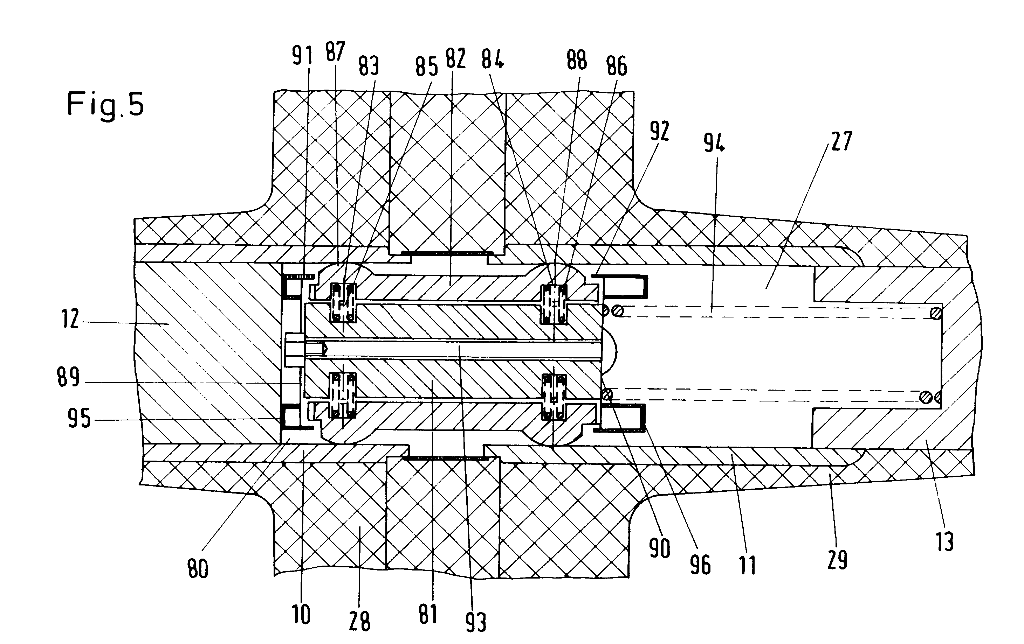

Es sei nun Bezug genommen auf die Fig. 5.

Die Fig. 5 zeigt in gleicher Weise wieder die beiden Leiter 10 und 11, die jeweils von dem Isolator 28 und 29 umgeben sind. Innerhalb des Leiters 10 befindet sich der Befestigungseinsatz 12, durch den eine Vertiefung 80 gebildet ist. Innerhalb des Leiterteilstückes 11 befindet sich der Einsatz 13, in dem die Vertiefung 27 gebildet ist. Zur Kontaktierung ist ein Kontaktkörper 81 vorgesehen, um den herum gleichmäßig verteilt Kontaktfinger 82 angeordnet sind. Diese Kontaktfinger sind balkenartig und besitzen im Bereich ihrer beiden Enden jeweils eine Sacklochbohrung 83 und 84, in dem eine Feder 85 und 86 angeordnet ist. Im Bereich dieser Sacklochbohrungen 83 und 84 besitzt der Kontaktfinger 82 an seiner Außenseite eine Wulst 87 und 88, die gegen die Innenfläche des Leiterteilstückes 10 bzw. 11 gedrückt sind. Zur Fixierung der Kontaktfinger 82 an dem Kontaktkörper 81 sind auf beiden Stirnseiten Fangnäpfe 89 und 90 angeordnet, die mit ihrem Napfrand 91 und 92 die Kontaktfinger im Bereich ihres Endes umfassen. Mittels einer durchgehenden Schraubenbolzenverbindung 93 sind die Fangnäpfe 89 und 90 an den Stirnseiten des Kontaktkörpers 81 festgehalten. Mittels einer der Feder 26 entsprechenden Feder 94 wird der Kontaktkörper 81 mit den Kontaktfingern 82 in die Vertiefung 80 hineingedrückt, wobei an der Außenseite des Napfbodens 89 (ebenso wie an der des Napfbodens 90) Füße 95 und 96 angeformt sind.

Die Fig. 5 zeigt zwei Kontaktfinger 82; selbstverständlich sind mehrere Kontaktfinger 82 vorhanden, die gleichmäßig am Umfang verteilt angeordnet sind.

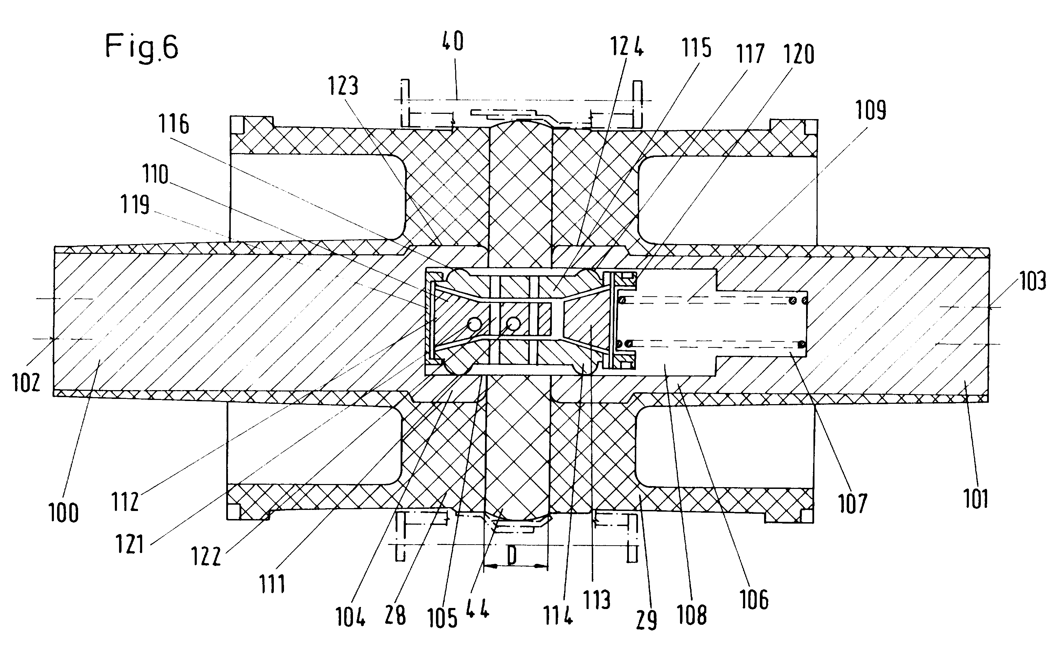

Es sei nun Bezug genommen auf die Fig. 6.

Im Zuge einer Hochspannungsleitung sind sich gegenüberliegende Leiterteilstücke 100 und 101 vorgesehen, die über Schraubenverbindungen 102 und 103 mit den entsprechenden anschließenden Leitern verbunden sind. An dem Leiterteilstück 100 ist ein zylinderförmiger, axial vorspringender Kragen 104 vorgesehen bzw. angeformt, der eine Vertiefung 105 umschließt. In gleicher Weise ist an dem Leiterteilstück 101 ein zylindrischer Vorsprung 106 angeformt, der zwei Innendurchmesserbereiche 107 und 108 aufweist; der Bereich 107 mit geringerem Durchmesser dient zur Aufnahme und Führung einer Druckfeder 109. Die beiden Leiterteilstücke 100 und 101 sind wieder in einem Abstand D voneinander entfernt. Zur Kontaktierung ist ein Kontaktkörper vorgesehen, der ein erstes Kontaktkörperteil 110 aufweist, das mit einem zylindrischen 111 und einem kegelstumpfförmig sich erweiternden Bereich 112 ausgebildet ist. Diesem ersten Kontaktkörperteil 110 ist ein zweites Kontaktkörperteil 113 zugeordnet, das eine Kegelstumpfform aufweist; die Kegelstumpfform des Bereiches 112 und das zweite Kontaktkörperteil 113 sind so einander zugeordnet, daß sich ihre größeren Durchmesser an entgegengesetzten Enden des Kontaktkörpers befinden.

Die beiden Kontaktkörperteile 110 und 113 sind von Kontaktfingern 114 und 115 überdeckt, die jeweils in ihren Endbereichen wulstförmige, radial vorspringende Noppen 116 und 117 aufweisen, mit denen die Kontaktfinger 114 und 115 gegen die Innenflächen der Vertiefungen oder Ausnehmungen 105 und 108 gedrückt sind. An den Stirnenden sind Napffänger 119 und 120 befestigt, die mit ihren Napfrändern die Kontaktfinger, die gleichmäßig am Umfang der beiden Kontaktkörperteile 110 und 113 verteilt angeordnet sind, umfassen und festhalten.

Die Kontaktfinger besitzen im Innenbereich eine Kontur, die der Kontur der kegelstumpfartigen Erweiterungen 112 und 113 angepaßt sind, so daß dann, wenn die beiden Kontaktkörperteile mittels der Feder 109 gegeneinander gedrückt sind, die Kontaktfinger 114 und 115 aufgrund der kegelstumpfförmigen Erweiterungen nach außen gedrückt werden. In dem Kontaktkörperteil 110 sind Querbohrungen 121 und 122 vorgesehen, die die Aufgabe der Querbohrungen 23 und 24 übernehmen.

An dem Leiterteilstück 100 bzw. 101 ist im Bereich der Kontaktierungsstellen der Noppen 116 und 117 ein Wulst 123 und 124 vorgesehen, deren Aufgabe es ist, den stromführenden Querschnitt am Kragen 104 bzw. 106 zu vergrößern.

Die Leiterteilstücke 100 und 101 sind wieder von Isolatoren 28 und 29 umgeben, die in gleicher Weise wie die Isolatoren gemäß Fig. 1 mittels der Schraubenverbindung 40 zusammengehalten sind. Zwischen den Isolatoren befindet sich wieder ein elastisches Toleranzausgleichsmaterial 44.

Die Fig. 6 zeigt die beiden Kontaktkörperteile 110 und 113, die beide eine konische Erweiterung aufweisen, die mit konischen Erweiterungen an den Kontaktfingern zusammenwirken. Es besteht natürlich auch die Möglichkeit, beispielsweise lediglich an dem Kontaktkörperteil 113 oder an dem Kontaktkörperteil 110 eine Erweiterung vorzusehen; dann würde eine Kontaktierung aufgrund der Keilwirkung lediglich an einem Ende, beispielsweise an den Noppen 117 oder an den Noppen 116 erzeugt. Die jeweils anderen Kontaktfingerenden würden dann auf andere Weise nach außen gedrückt. In diesem Falle wäre eine Kontaktierung dieses die Kontaktfinger tragenden Kontaktkörperteils mit der Innenfläche 105 durch solche Elemente denkbar, wie sie als Schraubenkontaktelemente 22 oder 19 bei der Ausführungsform nach Fig. 1 eingesetzt sind.

## Patentansprüche

1. Lösbare Kupplungsvorrichtung zwischen zwei miteinander fluchtenden elektrischen Leitern (10,11,100,101) aus Rohr- oder Vollmaterial, insbesondere für eine Mittel- und Hochspannungsanlage, vorzugsweise in einer SF₆-gasisolierten Metall- oder isolierstoffgekapselten Anlage mit an den aufeinanderzuweisenden Leiterenden angeordneten Trag- oder Schottisolatoren (28,29), an denen die Leiter (10,11,100,101) auseinanderbaubar sind, wobei an der Stirnseite jedes der in Abstand (D) zueinander zugeordneten Leiterenden je eine Vertiefung (27,52,56,80,105) vorgesehen ist, wobei ein Kontaktkörper (17,57,81) mit seinen Enden in beide Vertiefungen (27,52,56,80,105) eingreift, und über radiale Kontaktelemente (19,22,62,71) punkt- oder linienförmig mit den Innenflächen der Vertiefung (27,52,56,80,105) der Leiterenden in elektrisch leitendem Kontakt steht, dadurch gekennzeichnet, daß, der Kontaktkörper (17,57,81) federnd gegen einen Anschlag in der Vertiefung (27,52,56,80,105) in dem ersten Leiterende gedrückt ist und daß der Kontaktkörper (17,57,81) entgegen dem Druck der Feder (26,94,109) in die Vertiefung des zweiten Leiters drückbar ist und aus der Vertiefung (27,52,56,80,105) des ersten Leiterendes vollständig herausdrückbar ist, so daß eine Demontage des ersten Leiterendes quer zu seiner Längsachse gestattet ist.

2. Kupplungsvorrichtung nach Anspruch 1, dadurch gekennzeichnet, daß der Kontaktkörper (17,57,81) zylindrisch ausgebildet ist und auf der Außenseite Federelemente, z. B. Schraubenfedern, Kolbenringe, Multilamellenkontakte und dgl. aufweist, die zur elektrisch leitenden Verbindung zwischen dem Kontaktkörper (17,57,81) zu den Innenflächen dienen.

3. Kupplungsvorrichtung nach Anspruch 1, dadurch gekennzeichnet, daß der Kontaktkörper (17,57,81) zwei Kontaktkörperteile (110,113) aufweist, die ineinandergreifen und mittels einer Federanordnung auseinanderdrückbar sind, wobei die freien Enden der Kontaktkörper (17,57,81) gegen die Leiter (10,11,100,101) gedrückt sind.

4. Kupplungsvorrichtung nach Anspruch 3, dadurch gekennzeichnet, daß die freien Enden abgerundet und gegen Verengungen der Vertiefungen (27,52,56,80,105) gedrückt sind.

5. Kupplungsvorrichtung nach Anspruch 1, dadurch gekennzeichnet, daß auf der Außenfläche des Kontaktkörpers (17,57,81) achsparallel verlaufende Kontaktfinger (82,114,115) vorgesehen sind, die gegen die Innenflächen der Vertiefungen (27,52,56,80,105) gedrückt sind.

6. Kupplungsvorrichtung nach Anspruch 5, dadurch gekennzeichnet, daß die Kontaktfinger (82,114,115) federnd nach außen gedrückt sind.

7. Kupplungsvorrichtung nach Anspruch 5, dadurch gekennzeichnet, daß der Kontaktkörper (17,57,81) zweigeteilt ist und an wenigstens einem ersten der beiden Teile eine konische, sich zum dem anderen Teil entgegengesetzt liegenden Ende hin im Durchmesser vergrößernde Erweiterung (112,113) aufweist, daß die beiden Kontaktkörper (17,57,81) von den axial verlaufenden Kontaktfingern (82,114,115) überbrückt sind, und daß die Kontaktkörperteile (110,113) federnd gegeneinander und die Kontaktfinger (82,114,115) über die konische Erweiterung (112,113) nach außen gegen die Innenfläche der zugehörigen Vertiefung (27,52,56,80,105) gedrückt sind.

8. Kupplungsvorrichtung nach Anspruch 7, dadurch gekennzeichnet, daß auch das andere Teil des Kontaktkörpers (17,57,81) eine zum dem ersten Teil entgegengesetzt liegenden Ende hin sich im Durchmesser vergrößernde konische Erweiterung (112,113) aufweist, dergestalt daß beim Zusammendrücken der beiden Teile die Kontaktfinger (82,114,115) radial nach außen gedrückt sind.

9. Kupplungsvorrichtung nach einem der Ansprüche 7 und 8, dadurch gekennzeichnet, daß der Öffnungswinkel der konischen Erweiterungen (112,113) ca. 5° bis 15°, vorzugsweise 10° beträgt.

10. Kupplungsvorrichtung nach einem der Ansprüche 5 bis 9, dadurch gekennzeichnet, daß der Kontaktkörper Schlitze zur Führung der Kontaktfinger (82,114,115) aufweist.

11. Vorrichtung nach einem der Ansprüche 7 bis 10, dadurch gekennzeichnet, daß die Kontaktfinger (82,114,115) gleichmäßig am Umfang des Kontaktkörpers (17,57,81) verteilt angeordnet sind.

12. Kupplungsvorrichtung nach einem der vorherigen Ansprüche, dadurch gekennzeichnet, daß der Kontaktkörper (17,57,81) quer zu seiner Längsachse verlaufende und jeweils senkrecht zueinander ausgerichtete Durchgangslöcher aufweist.

## Claims

1. Detachable coupling device between two mutually aligned electrical conductors (10, 11, 100, 101) made of tubular material or solid material, especially for a medium-voltage and high-voltage installation, preferably in an SF₆-gas-insulated metal-encapsulated or insulating-material-encapsulated installation having supporting insulators or bulkhead insulators (28, 29) which are arranged on the conductor ends pointing towards one another and on which the conductors (10, 11, 100, 101) can be separated from one another, a depression (27, 52, 56, 80, 105) in each case being provided on the end of each of the conductor ends which are associated with one another and spaced apart (D), the ends of a contact body (17, 57, 81) engaging in both depressions (27, 52, 56, 80, 105), and being in electrically conductive contact via radial contact elements (19, 22, 62, 71) in the form of points or lines with the inner surfaces of the depression (27, 52, 56, 80, 105) in the conductor ends, characterized in that the contact body (17, 57, 81) is pressed in a sprung manner against a stop in the depression (27, 52, 56, 80, 105) in the first conductor end, and in that the contact body (17, 57, 81) can be pressed into the depression in the second conductor against the pressure of the spring (26, 94, 109) and can be pressed completely out of the depression (27, 52, 56, 80, 105) in the first conductor end, allowing the first conductor end to be removed transversely with respect to its longitudinal axis.

2. Coupling device according to Claim 1, characterized in that the contact body (17, 57, 81) is of cylindrical construction and has spring elements, for example helical springs, piston rings, multi-laminate contacts and the like, on the outside which are used for the electrically conductive connection between the contact body (17, 57, 81) and the inner surfaces.

3. Coupling device according to Claim 1, characterized in that the contact body (17, 57, 81) has two contact body parts (110, 113) which engage in one another and can be forced apart from one another by means of a spring arrangement, the free ends of the contact bodies (17, 57, 81) being pressed against the conductors (10, 11, 100, 101).

4. Coupling device according to Claim 3, characterized in that the free ends are chamfered and are pressed against constrictions in the depressions (27, 52, 56, 80, 105).

5. Coupling device according to Claim 1, characterized in that contact fingers (82, 114, 115) which run parallel to the axis and are pressed against the inner surfaces of the depressions (27, 52, 56, 80, 105) are provided on the outer surface of the contact body (17, 57, 81).

6. Coupling device according to Claim 5, characterized in that the contact fingers (82, 114, 115) are pressed outwards in a sprung manner.

7. Coupling device according to Claim 5, characterized in that the contact body (17, 57, 81) is split in two and, on at least a first of the two parts, has a conical expansion (112, 113) whose diameter increases towards the end located opposite the other part, in that the two contact bodies (17, 57, 81) are bridged by the axial running contact fingers (82, 114, 115), and in that the contact body parts (110, 113) are pressed against one another in a sprung manner and the contact fingers (82, 114, 115) are pressed outwards, over the conical expansion (112, 113), against the inner surface of the associated depression (27, 52, 56, 80, 105).

8. Coupling device according to Claim 7, characterized in that the other part of the contact body (17, 57, 81) also has a conical expansion (112, 113) whose diameter increases towards the end located opposite the first part, designed in such a manner that the contact fingers (82, 114, 115) are pressed radially outwards when the two parts are pressed together.

9. Coupling device according to one of Claims 7 and 8, characterized in that the vertex angle of the conical expansions (112, 113) is approximately 5° to 15°, preferably 10°.

10. Coupling device according to one of Claims 5 to 9, characterized in that the contact body has slots for guiding the contact fingers (82, 114, 115).

11. Device according to one of Claims 7 to 10, characterized in that the contact fingers (82, 114, 115) are arranged distributed uniformly on the circumference of the contact body (17, 57, 81).

12. Coupling device according to one of the preceding claims, characterized in that the contact body (17, 57, 81) has through-holes which run transversely with respect to its longitudinal axis and are in each case directed at right angles to one another.

## Revendications

1. Dispositif de couplage entre deux conducteurs (10, 11, 100, 101) électriques mutuellement alignés tubulaires ou pleins. notamment destiné à une installation à moyenne tension ou à haute tension, de préférence dans un poste blindé sous enveloppe métallique ou en matériau isolant, à isolant gazeux de type SF₆, avec des isolateurs porteurs ou des isolateurs de traversée (28, 29) disposés aux extrémités en vis-à-vis des conducteurs au niveau desquels les conducteurs (10, 11, 100, 101) peuvent être séparés, une cavité (27, 52, 56, 80, 105) étant prévue sur la face frontale des extrémités de conducteur associées disposées à une distance (D) l'une de l'autre, un corps de contact (17, 57, 81) pénétrant par ses extrémités dans les deux cavités (27, 52, 56, 80, 105) et étant en contact électro-conducteur ponctuel ou linéaire avec les surfaces intérieures des cavités (27, 52, 56, 80, 105) dans les extrémités de conducteur par l'intermédiaire d'éléments de contact (19, 22, 62, 71), caractérisé par le fait que le corps de contact (17, 57, 81) est pressé élastiquement contre une butée à l'intérieur de la cavité (27, 52, 56, 80, 105) dans la première extrémité de conducteur et par le fait que le corps de contact (17, 57, 81) peut être rentré dans la cavité du deuxième conducteur et déagé entièrement de la cavité (27, 52, 56, 80, 105) du premier conducteur à l'encontre de la pression du ressort (26, 94, 109), de manière à permettre un démontage de l'extrémité du premier conducteur transversalement à son axe longitudinal.

2. Dispositif de couplage selon la revendication 1, caractérisé par le fait que le corps de contact (17, 57, 81) est cylindrique et comporte sur sa face extérieure des éléments élastiques, par exemple des ressort hélicoïdaux, des segments de pistons, des contacts à lamelles multiples et similaires qui servent à réaliser la liaison électro-conductrice entre le corps de contact (17, 57, 81) et les surfaces intérieures.

3. Dispositif de couplage selon la revendication 1, caractérisé par le fait que le corps de contact (17, 57, 81) présente deux parties de corps de contact (110, 113) qui pénètrent l'une dans l'autre et sont repoussées dans des directions opposées par un agencement de ressorts, les extrémités libres des corps de contact (17, 57, 81) étant pressées contre les conducteurs (10, 11, 100, 101).

4. Dispositif de couplage selon la revendication 3, caractérisé par le fait que les extrémités libres sont arrondies et sont pressées contre une zone rétrécie des cavités (27, 52, 56, 80, 105).

5. Dispositif de couplage selon la revendication 1, caractérisé par le fait que des doigts de contact (82, 114, 115) parallèles sont prévus sur la surface extérieure du corps de contact (17, 57, 81), lesquels doigts sont pressés contre la surface intérieure des cavités (27, 52, 56, 80, 105).

6. Dispositif de couplage selon la revendication 5, caractérisé par le fait que les doigts de contact (82, 114, 115) sont repoussés élastiquement en direction de l'extérieur.

7. Dispositif de couplage selon la revendication 5, caractérisé par le fait que le corps de contact (17, 57, 81) est en deux parties et présente sur au moins une première partie une zone (112, 113) conique qui s'évase en direction de l'extrémité opposée à l'autre partie, par le fait que les deux corps de contact (17, 57, 81) sont pontés par les doigts de contact (82, 114, 115) qui s'étendent dans la direction axiale et par le fait que les parties de corps de contact (110, 113) sont pressées élastiquement l'une contre l'autre et que les doigts de contact (82, 114, 115) par le biais de la zone évasée (112, 113) sont pressés vers l'extérieur, contre la surface intérieure de la cavité correspondante (27, 52, 56, 80, 105).

8. Dispositif de couplage selon la revendication 7, caractérisé par le fait que l'autre partie du corps de contact (17, 57, 81) comporte également une zone qui s'évase en cône en direction de l'extrémité opposée à la première partie de telle sorte que lorsqu'on presse l'une contre l'autre les deux parties, les doigts de contact (82, 114, 115) sont repoussés radialement vers l'extérieur.

9. Dispositif de couplage selon une des revendications 7 et 8. caractérisé par le fait que l'angle d'ouverture de la zone évasée conique (112, 133) est compris dans une plage allant de 5° à 15°, de préférence est de 10°.

10. Dispositif de couplage selon une des revendications 5 à 9, caractérisé par le fait que le corps de contact comporte des fentes pour le guidage des doigts de contact (82, 114, 115).

11. Dispositif de couplage selon une des revendications 7 à 10, caractérisé par le fait que les doigts de contact (82, 114, 115) sont régulièrement répartis sur le pourtour du corps de contact (17, 57, 81).

12. Dispositif de couplage selon une des revendications précédentes, caractérisé par le fait que le corps de contact (17, 57, 81) comporte des trous de passage qui s'étendent transversalement à son axe longitudinal et sont mutuellement perpendiculaires.
